# EUROPEAN PATENT APPLICATION

(11) **EP 4 459 747 A1**
(43) Date of publication of application: **06.11.2024**
(21) Application number: 22914611.3
(22) Date of filing: 26.12.2022
(51) Int. Cl.: H01M 10/6554, H01M 10/6556, F28F 3/04, F28D 9/00

(54) **THERMAL MANAGEMENT ASSEMBLY AND BATTERY THERMAL MANAGEMENT SYSTEM**

(30) Priority: 30.12.2021 CN 202111651060
(71) Applicant: Valeo Systemes Thermiques, 78320 Le Mesnil Saint Denis (FR)
(72) Inventor: SUN, Jianqi, Jingzhou, Hubei 434000 (CN); XIANG, Wenchuan, Jingzhou, Hubei 434000 (CN); ZUO, Sheng, Jingzhou, Hubei 434000 (CN); NI, Jingyu, Jingzhou, Hubei 434000 (CN); FAN, Changsheng, Jingzhou, Hubei 434000 (CN); LIU, Zhigang, Jingzhou, Hubei 434000 (CN)
(74) Representative: Valeo Systèmes Thermiques
(86) International application number: PCT/CN2022/141772
(87) International publication number: WO 2023/125357

(57) **Abstract**

The present disclosure relates to a thermal management assembly, comprising: a heat exchange plate, wherein a heat transfer fluid flows in a flow channel of the heat exchange plate and exchanges heat with the outside; a fluid guide block installed on the heat exchange plate; an intermediate heat exchanger installed on the fluid guide block and having a first fluid path and a second fluid path, the heat transfer fluid in the first fluid path and that in the second fluid path exchanging heat; an expansion valve installed on a fluid guide block. The fluid guide block is further provided with a first opening, a second opening, and an installation chamber; the first opening is in fluid communication with the first fluid path of the intermediate heat exchanger; the installation chamber is in fluid communication with the first and second openings respectively; the expansion valve is installed in the installation chamber. The present disclosure further relates to a battery thermal management system comprising the thermal management assembly.

## Description

### TECHNICAL FIELD

The present disclosure relates to a thermal management assembly and a battery thermal management system comprising the thermal management assembly.

### BACKGROUND ART

As the automotive manufacturing industry develops toward electrification and increased intelligence, there is a demand for battery thermal management systems for automobiles to be more and more integrated and compact.

The battery thermal management system of an automobile comprises a battery and a thermal management assembly. The thermal management assembly comprises a heat exchange plate, an intermediate heat exchanger, and a fluid communication pipeline that connects the intermediate heat exchanger to one or more of a compressor, a condenser, an expansion valve, and an evaporator, wherein a heat transfer fluid flows through the fluid communication pipeline. The heat exchange plate of the thermal management assembly exchanges heat with the battery.

However, in the prior art, the heat exchange plate and the intermediate heat exchanger are often arranged far away from each other in different parts of a motor vehicle, which results in a long fluid communication pipeline and a complicated structure. This not only increases the manufacturing cost of the thermal management assembly, making it difficult to install the thermal management assembly, but also reduces the efficiency of the thermal management assembly, which increases the energy consumption of the automobile.

### SUMMARY OF THE INVENTION

Therefore, the present disclosure is intended to solve the aforementioned problems, and an objective thereof is to provide a thermal management assembly in which a heat exchanger, an intermediate heat exchanger, and an expansion valve are arranged adjacent to one another, and to provide a structurally simple fluid communication portion.

The objective is achieved by a thermal management assembly according to an embodiment of the present disclosure, said thermal management assembly comprising: a heat exchange plate, wherein a heat transfer fluid flows in a flow channel of the heat exchange plate and exchanges heat with the outside; a fluid guide block installed on the heat exchange plate; an intermediate heat exchanger installed on the fluid guide block and having a first fluid path and a second fluid path, wherein the heat transfer fluid in the first fluid path and that in the second fluid path exchange heat; an expansion valve installed on the fluid guide block. The fluid guide block is further provided with a first opening, a second opening, and an installation chamber; the first opening is in fluid communication with the first fluid path of the intermediate heat exchanger; the installation chamber is in fluid communication with the first opening and the second opening, respectively; the expansion valve is installed in the installation chamber.

Therefore, in the thermal management assembly according to the present disclosure, the heat exchanger, intermediate heat exchanger, and expansion valve are made for being installed adjacent to one another and in fluid communication with one another through a fluid guide block. The fluid guide block has a simple structure, and the length of the path through which a heat transfer fluid flows is shortened, which can reduce unnecessary heat exchange between the heat transfer fluid and the outside to improve the efficiency of the thermal management assembly. In addition, this structure of thermal management assembly allows a reduction in the required installation space to reduce manufacturing and installation costs.

The thermal management assembly according to the present disclosure may further have one or more of the following features individually or in combination.

According to an embodiment of the present disclosure, the second opening is in fluid communication with the flow channel of the heat exchange plate. By this structure, the heat transfer fluid throttled by an expansion valve enters the heat exchange plate through the second opening.

According to an embodiment of the present disclosure, the first fluid path receives the heat transfer fluid condensed by a condenser.

According to an embodiment of the present disclosure, the second fluid path receives the heat transfer fluid from the heat exchange plate, and, after heat exchange through the intermediate heat exchanger, transfers the heat transfer fluid to the compressor.

According to an embodiment of the present disclosure, the second fluid path receives the heat transfer fluid from the heat exchange plate through a communicating block.

According to an embodiment of the present disclosure, the communicating block is installed on the heat exchange plate.

According to an embodiment of the present disclosure, the communicating block is integrated with the fluid guide block. This integrated structure further increases the integration level of the thermal management assembly.

According to an embodiment of the present disclosure, the second fluid path receives the heat transfer fluid from the heat exchange plate through a connecting tube.

According to an embodiment of the present disclosure, the second opening is in fluid communication with an evaporator. By this structure, the heat transfer fluid throttled by an expansion valve enters the heat exchange plate through the second opening.

According to an embodiment of the present disclosure, the flow channel of the heat exchange plate receives the heat transfer fluid compressed by a compressor.

According to an embodiment of the present disclosure, the first fluid path receives the heat transfer fluid from the heat exchange plate so that the heat transfer fluid is transferred to an evaporator through the intermediate heat exchanger, the expansion valve, and the second opening.

According to an embodiment of the present disclosure, the first fluid path receives the heat transfer fluid from the heat exchange plate through a communicating block.

According to an embodiment of the present disclosure, the communicating block is installed on the heat exchange plate.

According to an embodiment of the present disclosure, the communicating block is integrated with the fluid guide block.

According to an embodiment of the present disclosure, the first fluid path receives the heat transfer fluid from the heat exchange plate through a connecting tube.

According to an embodiment of the present disclosure, the second fluid path receives the heat transfer fluid from an evaporator and transfers the heat transfer fluid to a compressor.

According to an embodiment of the present disclosure, the fluid guide block is brazed to the intermediate heat exchanger and/or the heat exchange plate. This brazing connection further allows the fluid guide block to be fixedly installed on the intermediate heat exchanger and/or heat exchange plate, increasing the integration level of the thermal management assembly.

According to an embodiment of the present disclosure, the heat exchange plate is formed by stacking a flat plate and a corrugated plate, wherein the fluid guide block is installed on the flat plate, and the corrugations of the corrugated plate form a flow channel of the heat exchange plate.

The present disclosure further provides a battery thermal management system comprising a thermal management assembly as described above. The heat exchange plate of the thermal management assembly exchanges heat with a battery.

The present disclosure further provides a motor vehicle comprising a battery thermal management system as described above.

### Brief Description of the Drawings

The above-mentioned and other features and advantages of the present disclosure will become more obvious through the following detailed description of exemplary embodiments in conjunction with the drawings. Moreover, this description and the drawings are merely for illustration purposes and do not limit the scope of the present disclosure in any way. In the drawings:
Fig. 1 is an exploded perspective view of a thermal management assembly according to a first embodiment of the present disclosure;
Fig. 2 and Fig. 3 are sectional views of the thermal management assembly shown in Fig. 1 at different cross sections;
Fig. 4 is a perspective view of a thermal management assembly according to a second embodiment of the present disclosure;
Fig. 5 is a fluid guide block according to the second embodiment of the present disclosure;
Fig. 6 is a sectional view of a thermal management assembly according to the second embodiment of the present disclosure;
Fig. 7 shows a fluid guide block and a communicating block that are integrally formed.

In all the drawings, identical or similar components are denoted by identical reference signs.

### Specific Embodiments

To clarify the objective, technical solutions and advantages of embodiments of the present disclosure, the technical solutions of the embodiments of the present disclosure are described clearly and completely below in conjunction with the drawings of the embodiments of the present disclosure.

Unless defined otherwise, the technical or scientific terms used herein shall have the common meanings as understood by those of ordinary skill in the art to which the present disclosure belongs. Words such as "an", "a" or "the" used in the description and the claims of the present disclosure do not indicate a quantity limit, but mean that there is at least one. "Comprise" or "include" or similar words mean that the element or object appearing before the word encompasses the elements or objects and their equivalents listed after the word, without excluding other elements or objects. Although expressions such as "first" and "second" are used to describe various components of the present disclosure, they are only intended to distinguish one component from another, rather than limiting the sequence or importance of the corresponding components. Without departing from the scope of the present disclosure, "first component" may be written as "second component", and, similarly, "second component" may be written as "first component". In addition, "upper", "lower", "left", "right", and other nouns of locality as mentioned herein are only used to indicate positional relationships relative to the drawings, and when the absolute position of the described object has changed, the relative positional relationship may also change accordingly.

Thermal management assemblies according to embodiments of the present disclosure will be specifically described below in conjunction with the drawings.

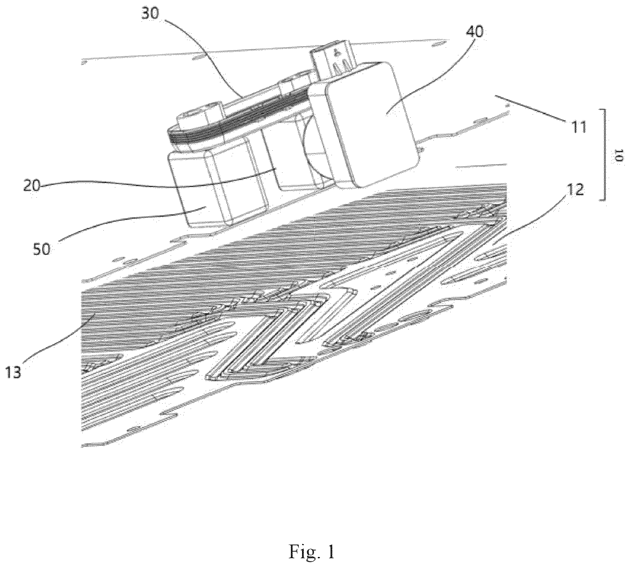

Fig. 1 to Fig. 3 show a thermal management assembly according to a first embodiment of the present disclosure. As shown in Fig. 1, the thermal management assembly comprises a heat exchange plate 10, a fluid guide block 20 and a communicating block 50 that are installed on the heat exchange plate 10, an intermediate heat exchanger 30 installed on the fluid guide block 20 and the communicating block 50, and an expansion valve 40 installed on the fluid guide block 20. The fluid guide block 20 is installed to abut the intermediate heat exchanger 30 and the heat exchange plate 10. For example, the fluid guide block 20 may be brazed to the intermediate heat exchanger 30 and the heat exchange plate 10. The communicating block 50 adopts a block form similar to the fluid guide block 20 and may be brazed to the intermediate heat exchanger 30 and the heat exchange plate 10. Conceivably, the communicating block 50 may also be in the form of a connecting tube, for example. Therefore, the heat exchange plate 10, the intermediate heat exchanger 30, and the expansion valve 40 are adjacent to one another, and the need for any additional connecting components, such as an assembly block and a connecting tube, therebetween is eliminated.

As shown in Fig. 1, the heat exchange plate 10 is formed by stacking a flat plate 11 and a corrugated plate 12. The fluid guide block 20 and the communicating block 50 are installed on the flat plate 11. The corrugations of the corrugated plate 12 are sealed by the flat plate 11, forming a flow channel 13 of the heat exchange plate 10. The flow channel 13 is distributed throughout the heat exchange plate, and a heat transfer fluid F flows in the flow channel 13 and exchanges heat with the outside, for example, with a battery of a motor vehicle.

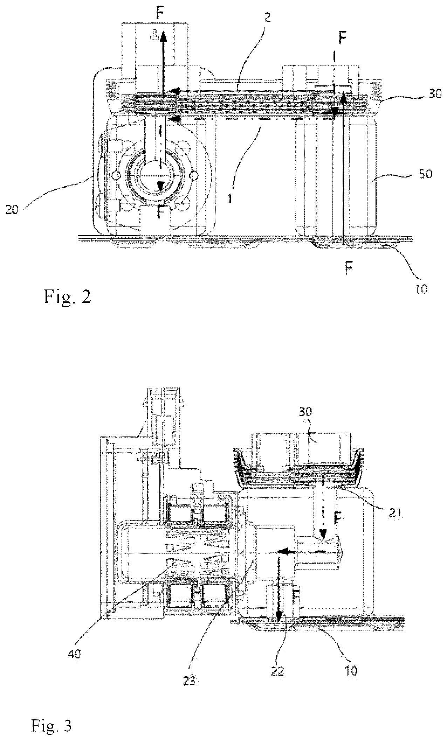

Referring to Fig. 2 and Fig. 3, the intermediate heat exchanger 30 has a first fluid path 1 and a second fluid path 2 that are isolated from each other. The heat transfer fluid F in the first fluid path 1 and that in the second fluid path 2 have different temperatures and undergo heat exchange in the intermediate heat exchanger 30. The fluid guide block 20 is provided with a first opening 21, a second opening 22, and an installation chamber 23. The first opening 21 is arranged at the end of the fluid guide block 20 abutting the intermediate heat exchanger 30 and is in fluid communication with the first fluid path 1 of the intermediate heat exchanger 30. The second opening 22 is arranged at the end of the fluid guide block 20 opposite to the first opening 21 and is in fluid communication with the flow channel 13 of the heat exchange plate 10. The installation chamber 23 is located between the first opening 21 and the second opening 22, and is in fluid communication respectively therewith. As shown in Fig. 3, the installation chamber 23 opens toward one side of the fluid guide block 20, and the expansion valve 40 is installed in the installation chamber 23. The flow of the heat transfer fluid F from the first opening 21 and the second opening 22 needs to pass through the expansion valve 40. In other words, the fluid guide block 20 forms the valve seat of the expansion valve 40, thereby eliminating the need for any specialized parts for use as the valve seat.

Fig. 2 and Fig. 3 are the flow paths of the heat transfer fluid F in the thermal management assembly. The heat transfer fluid F condensed by a condenser (not shown in the drawings) flows into the first fluid path 1 of the intermediate heat exchanger 30, exchanges heat with the heat transfer fluid F in the second fluid path 2, and then enters the expansion valve 40 through the first opening 21 of the fluid guide block 20 from the intermediate heat exchanger 30. After being throttled by the expansion valve 40, the heat transfer fluid F enters the flow channel 13 of the heat exchange plate 10 through the second opening 22, flows in the flow channel 13 of the heat exchange plate 10 and exchanges heat with the outside, and then flows into the second fluid path 2 of the intermediate heat exchanger 30 through the communicating block 50. The heat transfer fluid F in the second fluid path 2 flows from the intermediate heat exchanger 30 to a compressor (not shown in the drawings) after exchanging heat with the heat transfer fluid F in the first fluid path 1. The heat transfer fluid F enters a condenser after being compressed by the compressor, and after being condensed by the condenser, it flows back into the first fluid path 1 of the intermediate heat exchanger 30, and circulates through the above path.

In the above-described first embodiment of the thermal management assembly, the heat exchange plate 10 serves as a cooling plate, and the heat transfer fluid F evaporates and absorbs heat in the heat exchange plate 10, which may be used to cool external components such as batteries. The heat transfer fluid F has a higher temperature after being compressed by the compressor, as indicated by the dashed lines in Fig. 2 and Fig. 3, and is cooled to a lower temperature after being throttled by the expansion valve 40, as indicated by the solid lines in Fig. 2 and Fig. 3. The heat transfer fluid F in the first fluid path 1 has a higher temperature, while the heat transfer fluid F in the second fluid path 2 has a lower temperature, so heat exchange may occur in the intermediate heat exchanger 30. This heat exchange can increase the temperature of the heat transfer fluid F entering a compressor and decrease the temperature of the heat transfer fluid F entering the expansion valve 40, thereby improving the thermal efficiency of the thermal management assembly.

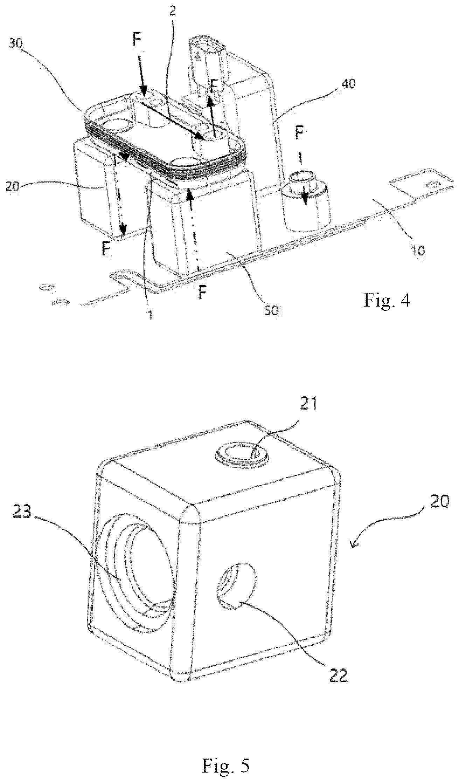

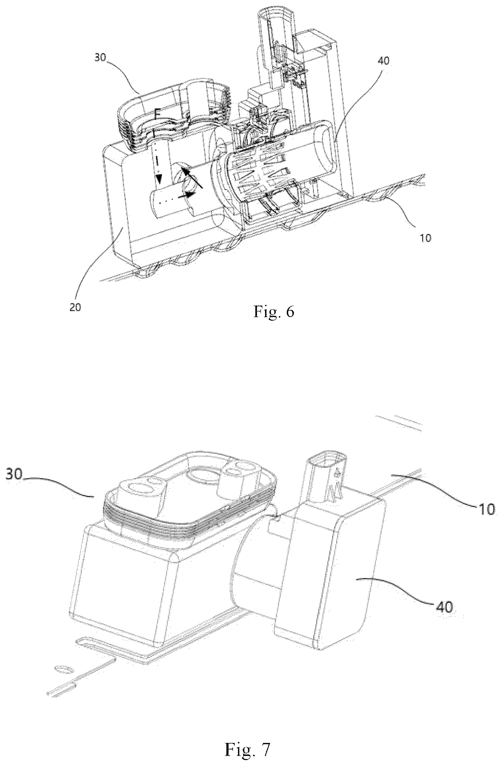

Fig, 4 to Fig. 6 are a thermal management assembly according to a second embodiment of the present disclosure. Similar to the first embodiment, as shown in Fig. 4, the thermal management assembly comprises a heat exchange plate 10, a fluid guide block 20 and a communicating block 50 that are installed on the heat exchange plate 10, an intermediate heat exchanger 30 installed on the fluid guide block 20 and the communicating block 50, and an expansion valve 40 installed on the fluid guide block 20. The heat exchange plate 10 is structurally similar to the first embodiment. The intermediate heat exchanger 30 has a first fluid path 1 and a second fluid path 2, which are isolated from each other and between which the heat transfer fluid F can undergo heat exchange.

Referring to Fig. 5 and Fig. 6, the fluid guide block 20 is provided with a first opening 21, a second opening 22, and an installation chamber 23. The first opening 21 is arranged at the end of the fluid guide block 20 abutting the intermediate heat exchanger 30, and is in fluid communication with the first fluid path 1 of the intermediate heat exchanger 30. The second opening 22 is located on one side of the fluid guide block 20. The installation chamber 23 is located between the first opening 21 and the second opening 22, and is in fluid communication therewith respectively. As shown in Fig. 5, the installation chamber 23 opens toward the other side of the fluid guide block 20, and the expansion valve 40 is installed in the installation chamber 23. The flow of the heat transfer fluid F from the first opening 21 and the second opening 22 needs to pass through the expansion valve 40.

As shown in Fig. 4 to Fig. 6, the flow path of heat transfer fluid F is as follows: the heat transfer fluid F, compressed by the compressor, flows into the heat exchange plate 10, exchanges heat with the outside in the heat exchange plate 10, and then flows into the first fluid path 1 of the intermediate heat exchanger 30 through the communicating block 50. After heat exchange with the heat transfer fluid F in the second fluid path 2, the heat transfer fluid F enters the expansion valve 40 through the first opening 21 of the fluid guide block 20, is throttled by the expansion valve 40, and then flows to an evaporator (not shown in the drawings) through the second opening 22. The heat transfer fluid F absorbs heat and evaporates in the evaporator and then flows into the second fluid path 2 of the intermediate heat exchanger 30, exchanging heat with the heat transfer fluid F in the first fluid path 1, and then flowing from the intermediate heat exchanger 30 to a compressor (not shown in the drawings). After being compressed by the compressor, the heat transfer fluid F flows back into the heat exchange plate 10 and circulates through the above path.

In the above-described second embodiment of the thermal management assembly, the heat exchange plate 10 serves as a heating plate, and the heat transfer fluid F condenses and releases heat in the heat exchange plate 10, wherein the heat may be used to heat external components such as batteries. Similar to Fig. 2 and Fig. 3, the heat transfer fluid F with a higher temperature after being compressed by the compressor is indicated by a dashed line, while the heat transfer fluid F with a lower temperature after being throttled by the expansion valve 40 is indicated by a solid line. Similarly, the heat transfer fluid F in the first fluid path 1 has a higher temperature, while the heat transfer fluid F in the second fluid path 2 has a lower temperature, so heat exchange may occur in the intermediate heat exchanger 30, thereby increasing the temperature of the heat transfer fluid F entering the compressor, while reducing the temperature of the heat transfer fluid F entering the expansion valve 40, which improves the thermal efficiency of the thermal management assembly.

The fluid guide block 20 and communicating block 50 described above are both separate components. Fig. 7 is an optional embodiment in which a fluid guide block and a communicating block are integrated into an integral component. As shown in Fig. 7, the integral component formed by a fluid guide block and a communicating block is installed on the heat exchange plate 10, the intermediate heat exchanger 30 is installed on the integral component, and the expansion valve 40 is also installed on the integral component. The structure shown in Fig. 7 further increases the integration level of the thermal management assembly to reduce the number of components.

An embodiment of the present disclosure further provides a battery thermal management system comprising a thermal management assembly as described above and a motor vehicle comprising a battery thermal management system as described above.

It should be understood that the structures described above and shown in the drawings are only examples of the present disclosure, which may be replaced by other structures exhibiting the same or similar functions for obtaining the desired final result. In addition, it should be understood that the embodiment described above and shown in the drawings should be deemed to merely constitute a nonrestrictive example of the present disclosure, and that it may be modified in various manners within the scope defined by the claims.

## Claims

1. A thermal management assembly, **characterized in that** the thermal management assembly comprises
a heat exchange plate (10), wherein a heat transfer fluid (F) flows in a flow channel (13) of the heat exchange plate (10) and exchanges heat with the outside,
a fluid guide block (20) installed on the heat exchange plate (10),
an intermediate heat exchanger (30) installed on the fluid guide block (20) and having a first fluid path (1) and a second fluid path (2), wherein the heat transfer fluid (F) in the first fluid path (1) and that in the second fluid path (2) exchange heat, and
an expansion valve (40) installed on the fluid guide block (20),
wherein the fluid guide block (20) is further provided with a first opening (21), a second opening (22), and an installation chamber (23); the first opening (21) is in fluid communication with the first fluid path (1) of the intermediate heat exchanger (30); the installation chamber (23) is in fluid communication with the first opening (21) and the second opening (22) respectively; the expansion valve (40) is installed in the installation chamber (23).

2. The thermal management assembly as claimed in claim 1, **characterized in that**
the second opening (22) is in fluid communication with a flow channel (13) of the heat exchange plate (10).

3. The thermal management assembly as claimed in claim 2, **characterized in that**
the first fluid path (1) receives a heat transfer fluid (F) condensed by a condenser.

4. The thermal management assembly as claimed in claim 2 or 3, **characterized in that**
the second fluid path (2) receives a heat transfer fluid (F) from the heat exchange plate (10), and, after heat exchange through the intermediate heat exchanger (30), transfers the heat transfer fluid (F) to a compressor.

5. The thermal management assembly as claimed in claim 4, **characterized in that**
the second fluid path (2) receives a heat transfer fluid (F) from the heat exchange plate (10) through a communicating block (50); the communicating block (50) is installed on the heat exchange plate (10); the intermediate heat exchanger (30) is further installed on the communicating block (50).

6. The thermal management assembly as claimed in claim 5, **characterized in that**
the communicating block (50) is integrated with the fluid guide block (20).

7. The thermal management assembly as claimed in claim 1, **characterized in that**
the second opening (22) is in fluid communication with an evaporator.

8. The thermal management assembly as claimed in claim 7, **characterized in that**
the flow channel (13) of the heat exchange plate (10) receives a heat transfer fluid (F) compressed by a compressor.

9. The thermal management assembly as claimed in claim 8, **characterized in that**
the first fluid path (1) receives a heat transfer fluid (F) from the heat exchange plate (10) so that the heat transfer fluid (F) is transferred to an evaporator through the intermediate heat exchanger (30), the expansion valve (40), and the second opening (22).

10. The thermal management assembly as claimed in claim 9, **characterized in that**
the first fluid path (1) receives a heat transfer fluid (F) from the heat exchange plate (10) through a communicating block (50); the communicating block (50) is installed on the heat exchange plate (10); the intermediate heat exchanger (30) is further installed on the communicating block (50).

11. The thermal management assembly as claimed in claim 10, **characterized in that**
the communicating block (50) is integrated with the fluid guide block (20).

12. The thermal management assembly as claimed in claim 9, **characterized in that**
the second fluid path (2) receives a heat transfer fluid (F) from an evaporator and transfers the heat transfer fluid (F) to a compressor.

13. The thermal management assembly as claimed in claim 1, **characterized in that**
the fluid guide block (20) is brazed to the intermediate heat exchanger (30) and/or the heat exchange plate (10).

14. The thermal management assembly as claimed in claim 1, **characterized in that**
the heat exchange plate (10) is formed by stacking a flat plate (11) and a corrugated plate (12), wherein the fluid guide block (20) is installed on the flat plate (11), and the corrugations of the corrugated plate (12) form a flow channel (13) of the heat exchange plate.

15. A battery thermal management system, **characterized in that** the battery thermal management system comprises a battery and a thermal management assembly as claimed in any one of claims 1 to 14, wherein the heat exchange plate of the thermal management assembly exchanges heat with the battery.
